# EUROPÄISCHE PATENTSCHRIFT

(11) **EP 4 500 640 B1**
(45) Veröffentlichungstag und Bekanntmachung des Hinweises auf die Patenterteilung: **12.08.2026**
(21) Anmeldenummer: 23718969.1
(22) Anmeldetag: 03.04.2023
(51) Int. Cl.: H01R 13/533, B29C 48/11, E04C 2/36, B29C 45/00, B32B 5/24, B29D 24/00, B32B 3/12, B32B 15/00, B32B 27/06

(54) **TEMPERIERBARER STECKVERBINDER**
TEMPERATURE-CONTROLLABLE PLUG-IN CONNECTOR
CONNECTEUR ENFICHABLE À TEMPÉRATURE POUVANT ÊTRE RÉGULÉE

(30) Priorität: 22.04.2022 DE 102022109760
(43) Veröffentlichungstag der Anmeldung: 05.02.2025
(73) Patentinhaber: HARTING Electric Stiftung & Co. KG, 32339 Espelkamp (DE)
(72) Erfinder: GHEZZO, Fabrizia, 32339 Espelkamp (DE); CORDING, Christian, 32339 Espelkamp (DE)
(74) Vertreter: noventive Patentanwaltsgesellschaft mbH
(86) Internationale Anmeldenummer: PCT/DE2023/100255
(87) Internationale Veröffentlichungsnummer: WO 2023/202742

(56) Entgegenhaltungen:
- DE-A1- 102018 108 181
- US-A1- 2022 118 866
- US-B2- 10 696 009

## Beschreibung

Die Erfindung handelt von einem Steckverbinder zum Übertragen hoher elektrischer Leistungen, der leicht, robust und aktiv temperierbar ist.

### Stand der Technik

Die Erfindung handelt von Steckverbindern, zum Beispiel Industrie-Hochleistungs- und/oder Hochspannungssteckverbindern oder Ladesteckverbinder für Elektrofahrzeuge, die einen erweiterten Temperaturbereich und eine erhöhte Sicherheit aufweisen.

In der heutigen immer stärker industrialisierten Welt und mit dem notwendigen Aufkommen eines größeren Anteils erneuerbarer Energien, wie beispielsweise aus Photovoltaik und Windkraft, wird elektrischer Strom als die universellste Energieform immer wichtiger. Diese ersetzt immer mehr andere, meist chemisch gebundene Energieformen, welche auf langkettigen Kohlewasserstoffen aufgebaut sind.

Zur flächenmäßigen Verteilung des Stroms werden Verteilernetze benötigt. Viele der stromverbrauchenden Endgeräte werden über Steckverbinder an das Verteilernetz angeschlossen. Vor allem im industriellen Bereich werden heutzutage oftmals Hochleistungssteckverbindersysteme benötigt, welche in der Lage sind hohe Energien zu übertragen. Mehrere hundert Ampere in einer Steckverbindung sind hier keine Seltenheit. Solche Steckverbinder haben meistens auch ein außerordentlich hohes Isolationsvermögen von üblicherweise mehreren tausend Volt. Die Kontakte solcher Steckverbindersysteme sind daher hochbelastet, und können trotz sorgfältiger Auslegung mit sehr geringen Übergangswiderständen unter Volllast sehr warm werden. Diese Wärme muss über das Gehäuse abgeführt werden, das daher ebenfalls einerseits robust ausgelegt sein muss und oftmals Metalllegierungen als Gehäusematerial verwendet, andererseits wie oben schon erwähnt hohe Spannungen isolieren können muss, wozu üblicherweise Kunststoffe, wie z. B. Polyamid verwendet werden. Steckverbindungen, die den Elementen ausgesetzt sind, wie zum Beispiel Steckverbinder zwischen zwei Waggons eines Zuges müssen außerdem abgedichtet sein, damit keine Feuchtigkeit an die empfindlichen Kontakte gelangt. Gerade solche Steckverbinder im Bahnbereich leiden im Winter oft unter Vereisungen, welche es unmöglich machen, die Steckverbindung bei Umkonfiguration eines Zuges zu lösen.

Im medizinischen Bereich, in Datenzentren, bei Hochpräzisionsgeräten usw. können Steckverbinder, die Strom und Daten übertragen, aufgrund der geringen Wärmeableitung der Materialien überhitzen. Dies macht sie zu einem Problem für einige in der Nähe befindliche Messgeräte oder hoch empfindliche elektronische Teile, da sich nach längerem Dauerbetrieb Wärme aufbaut.

Der zweite zu berücksichtigende Aspekt ist das Gewicht von gängigen Steckverbindern (zum Beispiel Hochspannungs-Hochleistungssteckverbinder). In manchen Bereichen wie zum Beispiel in der Bahnindustrie gibt es die Notwendigkeit, aufgrund der Energiesparanforderungen das Gewicht dieser Steckverbinder zu reduzieren. Das Gehäuse des Steckverbinders besteht aufgrund der Anforderungen an die Widerstandsfähigkeit im Allgemeinen aus einigen mm dickem (~4 mm) Metall (z. B. aus Al, Ni, Metalllegierungen usw.).

Diese Gehäuse werden im Allgemeinen im Druckgussverfahren hergestellt. Für diese Anwendungen wäre es ideal, das Gewicht des Gehäuses zu verringern und dem gesamten Steckverbindersystem eine größere Vielseitigkeit und weitere Funktionen zu verleihen, wobei die Widerstandsfähigkeit und die mechanische Leistung nicht beeinträchtigt werden darf.

Es gibt für solche Bereiche also Bedarf an Steckverbindern, die gegenüber bekannten Systemen ein verbessertes thermisches Management aufweisen, so dass sie weder leicht überhitzen noch leicht einfrieren können.

Dabei ist aus der DE 10 2018 108181 A1 ein Ladekoppler für Elektrofahrzeuge bekannt, der eine passive Kühlvorrichtung mit einem Latentwärmespeicher und einem Phasenwechselmaterial umfasst. Das Phasenwechselmaterial absorbiert Wärme und schmilzt, ohne dass es aktiv zirkuliert oder strömt.

Die US 10 696 009 B2 offenbart eine 3D-Waben-Schaumstruktur. Die Struktur ermöglicht eine optimale mechanische Leistung bei geringem Gewicht, indem sie die Steifigkeit und Festigkeit maximiert.

In der US 2022/118866 A1 wird ein Ladeanschluss für Elektrofahrzeuge beschrieben, bei dem Ladepins durch poröse Käfige mit Phasenwechselmaterial passiv gekühlt werden. Das Phasenwechselmaterial absorbiert Wärme beim Schmelzen und verbleibt an seiner Position innerhalb der Käfige.

Das Deutsche Patent- und Markenamt hat in der Prioritätsanmeldung zur vorliegenden Anmeldung den folgenden Stand der Technik recherchiert: DE 10 2015 104 029 B3, DE 10 2012 102 275 A1, DE 10 2016 213 873 A1, DE 10 2017 122 662 A1, DE 10 2019 111 749 A1, CN 212 626 226 U, CN 105 099 548 A und JP 2009-266418 A.

### Aufgabenstellung

Es ist Aufgabe der Erfindung, einen verbesserten Steckverbinder anzugeben, der die oben genannten Probleme nicht mehr aufweist, und bei ähnlicher Robustheit ein verringertes Gewicht aufweist.

Die Aufgabe wird hierbei gelöst mit einem Steckverbinder gemäß den Merkmalen des Anspruchs 1. Bevorzugte Ausführungsformen der Erfindung sind in den abhängigen Ansprüchen beschrieben.

Die Erfindung ermöglicht es dabei, die internen Module des Steckverbinders bei außergewöhnlichen Temperaturschwankungen (extreme Hitze oder extreme Kälte) vor der äußeren Umgebung zu schützen. Umgekehrt kann der erfindungsgemäße Steckverbinder auch die Umgebung vor übermäßiger Wärme schützen, die von den Kontakten im Isolierkörper der internen Module des Steckverbinders erzeugt werden und sonst durch das Gehäuse nach außen abgestrahlt wird.

Der Einsatz der vorliegenden Erfindung löst hierbei viele Probleme. So kann beispielsweise das Vereisen von Steckverbindungen zwischen zwei Waggons im Bahnbetrieb im Winter verhindert werden. Eine auftretende Vereisung verhindert das Lösen solch einer Steckverbindung. Eine aktive Temperierung des Gehäuses des Steckverbinders kann diese Vereisungen auftauen und die Steckverbindung dadurch wieder lösbar machen.

Die Aufgabe wird insbesondere gelöst mit einem Steckverbinder zum Übertragen hoher elektrischer Leistungen, aufweisend mindestens einen Kontakt zum Übertragen der elektrischen Leistung, ein Gehäuse zum Halten und Isolieren des mindestens einen Kontakts, wobei Wände des Gehäuses zumindest teilweise aus einer Sandwichstruktur bestehen, welche die Durchleitung eines Mediums zur Temperierung ermöglichen, und das Gehäuse mindestens einen Eingangsanschluss zum Einleiten des Mediums und mindestens einen Ausgangsanschluss zum Ausleiten des Mediums aufweist. Diese Maßnahme ermöglicht vorteilhaft eine aktive Temperierung des Gehäuses bei gleichzeitiger Gewichtsreduzierung und im Wesentlichen der Erhaltung der mechanischen Eigenschaften, so dass der Steckverbinder in einem weiteren Bereich eingesetzt werden kann, sicherer und leichter ist. Der Begriff "hohe elektrische Leistung" umfasst im Folgenden Leistungen mit Strömen von mehreren zehn bis mehreren hundert Ampere bei Spannungen von mehreren hundert bis hin zu einigen tausend Volt.

Erfindungsgemäß weist die Sandwichstruktur eine obere Deckschicht und eine untere Deckschicht auf, zwischen denen ein Kern angeordnet ist, welcher eine Struktur aufweist, die geeignet ist, das Medium durch sie hindurch fließen zu lassen, wobei eine der Deckschichten an der Außenseite des Gehäuses angeordnet ist und die andere Deckschicht an der Innenseite des Gehäuses angeordnet ist. Diese Maßnahme stellt vorteilhaft eine besonders effiziente Wärmeübertragung vom Gehäuse des Steckverbinders auf das Medium sicher, verringert das Gewicht des Gehäuses bei nahezu gleichen mechanischen Eigenschaften, und vergrößert die mechanischen Abmessungen des Gehäuses dabei kaum oder gar nicht.

In einer Ausführungsform ist der Kern ein offenporiger Schaum aus Metall, einem Polymer oder einem natürlichen Material. Solch ein Kern ist vorteilhaft einfach herzustellen und bezüglich Wärmeübergang und -fluss des Mediums gut geeignet.

In einer anderen Ausführungsform weist der Kern eine gitterförmige Struktur auf, die pyramidenförmig, tetraederförmig oder trihexagonal ausgestaltet sein kann. Solche Gehäuse können vorteilhaft entweder durch Feinguss oder mittels eines additiven Fertigungsverfahrens hergestellt werden, so dass auch komplexe Gehäuseformen realisierbar sind.

In einer anderen Ausführungsform weist der Kern eine gewebte oder gewirkte Struktur auf, wobei die Webfäden aus Metall, einer Kunstfaser, einer natürlichen Faser oder einer Mischung bestehen. Web- und Wirkverfahren sind technisch besonders effizient und ausgereift, so dass das Gehäuse mit solch einem Kern besonders effizient und kostengünstig hergestellt werden kann.

Generell kann die Sandwichstruktur aus vielen verschiedenen Stoffsystemen bestehen, Die Decklagen können aus einem anderen Material als der Kern sein, um bestimmte Anforderungen zu erfüllen.

Die Materialien, aus denen die Decklagen bestehen, können Aluminium, Stahl, Nickel, Titan, andere Metalle, Metalllegierungen, Polymere, biokompatible Polymere, selbstheilende Polymere, Polymere mit Formgedächtnis, Materialien auf Faserbasis (Verbundwerkstoffe), Materialien auf Keramikbasis, mit Metallen verstärkte Polymere, Keramik, Glas, Kohlenstofffasern/Flocken/Nanopartikel oder selektive Kombinationen der oben genannten Materialien sein.

Die Kernmaterialien können aus offenzelligen Metallschäumen, offenzelligen Schäumen aus Metalllegierungen, offenzelligen Polymerschäumen, offenzelligen Schäumen aus natürlichen Materialien (z. B. Kork) usw. ausgewählt werden, sind aber nicht auf diese beschränkt.

Die Kanäle in den Kernmaterialien (Polymere oder Metalle oder eine Kombination daraus) können beliebig geformt sein. Das System funktioniert ähnlich wie Blutgefäße in einem Körper. Die Verteilung der Kanäle im Kernmaterial des Gehäuses wird in Abhängigkeit von der Verteilung der von den Kontakten im Isolierkörper abgestrahlten Wärme auf das Gehäuse hin optimiert. Die Gestaltung des Netzes solcher Kanäle hängt von der Gehäuseform, der Größe und der Stelle ab, an der die maximale Wärme im Gehäuse erreicht wird.

Ein Fachmann, der in technischer Mechanik und in Werkstoffen geschult ist, kann so ein System derart gestalten, dass es den Anforderungen der spezifischen Zielanwendung entspricht.

Die Sandwichstruktur kann auch aus lediglich einem Material bestehen, welches aus den obigen Materialien gewählt werden kann. Bei der Verwendung von additiven Fertigungsverfahren, wie beispielsweise dem 3D-Druck, können die Decklagen und der Kern einstückig hergestellt werden. Bei Nutzung von modernen additiven Fertigungsverfahren kann der Wechsel von Materialien in ein und demselben Bauteil gestaltet und hergestellt werden.

Die Gesamtstruktur kann als Sandwichstruktur (2 Decklagen und ein Kern) oder als eine Decklage, die vor der äußeren Umgebung schützt, und einem Kern (in diesem Fall ist die Innenseite des Kerns nicht porös) ausgeführt werden. Diese Struktur kann unter Verwendung der oben genannten Materialien und einer beliebigen Kombination dieser Materialien, die die mechanischen/strukturellen, thermischen, stoßfesten und sonstigen Anforderungen erfüllen, entworfen werden.

In einer Ausführungsform sind der Eingangsanschluss und Ausgangsanschluss zum Temperieren großer Teile des Gehäuses an gegenüberliegenden Seiten des Gehäuses angeordnet. Dadurch durchfließt das Medium einen Großteil des Gehäuses, was vorteilhaft einen besonders guten Wärmeübergang zur Folge hat.

In einer weiteren Ausführungsform besteht der Ausgangsanschluss aus einem oder mehreren Durchbrüchen durch die Deckschicht an der Außenseite des Gehäuses, durch die das gasförmige Medium austreten kann. Dies ist besonders bei einer Temperierung mit Luft als Medium vorteilhaft, da die Luft, z. B. Druckluft in der Steckverbindung eines Zuges an den Durchbrüchen ganz einfach wieder austreten kann und somit vorteilhaft kein aufwändiges Kreislaufsystem etabliert werden muss.

In einer davon abweichenden Ausführungsform sind Eingangsanschluss und Ausgangsanschluss an derselben Ebene des Gehäuses wie der mindestens eine elektrische Kontakt zum gleichzeitigen Herstellen der Verbindung des elektrischen Kontakts und des Mediums angeordnet. Diese Maßnahme stellt bei der Anforderung eines geschlossenen Kreislaufsystems vorteilhaft sicher, dass die elektrischen Anschlüsse und die des Mediums gleichzeitig mit Stecken des Steckverbindersystems hergestellt werden, was die Handhabung eines solchen Systems besonders vereinfacht.

In einer bevorzugten Ausführungsform ist das Gehäuse mit einem additiven Fertigungsverfahren herstellbar. Damit können vorteilhaft auch komplexe Gehäuseformen und komplexe Kerngeometrien gut und zuverlässig hergestellt werden.

Die Form des Gehäuses ist für eine schnellere Wärmeableitung und eine hohe strukturelle Festigkeit für die jeweilige Anwendung (Züge, Luft- und Raumfahrt, Datenzentren usw.) optimiert, in der es benötigt wird.

In einer Ausführungsform ist ein Temperierungssystem zur Temperierung des Mediums in den Steckverbinder integriert. Besonders bei großen Hochleistungsstecksystemen kann dadurch ein besonders autarkes Stecksystem realisiert werden.

In einer davon abweichenden Ausführungsform ist das Temperierungssystem zur Temperierung des Mediums außerhalb des Steckverbinders angeordnet. Gerade bei kleineren Steckverbindern oder einer Anlage mit vielen dieser Steckverbinder kann diese Maßnahme vorteilhaft effizienter und kostengünstiger sein. Hier ist es von Vorteil, wenn ein Temperatursensor im Gehäuse angeordnet ist, der dem Temperierungssystem mitteilen kann, wann das Gehäuse wegen zu hoher oder zu niedriger Temperatur temperiert werden muss.

### Ausführungsbeispiele

Ausführungsbeispiele der Erfindung sind in den Zeichnungen dargestellt und werden im Folgenden näher erläutert. Es zeigen:
- Fig. 1: auf der linken Seite eine erste Ausführungsform eines Steckverbinders, dessen Gehäusewände aus einer Sandwichstruktur wie auf der rechten Seite gezeigt bestehen,
- Fig. 2: dieselbe erste Ausführungsform des Steckverbinders auf der linken Seite, wobei durch die Sandwichstruktur ein Medium zur Temperierung des Gehäuses geleitet wird, wie auf der rechten Seite angedeutet,
- Fig. 3: eine schematische Darstellung der Sandwichstruktur, bestehend aus einer unteren Decklage, einem inneren Kern und einer oberen Decklage,
- Fig. 4: eine zweite Ausführungsform eines Steckverbinders, der ebenfalls ein Gehäuse aufweist, dessen Wände aus einer Sandwichstruktur gefertigt sind,
- Fig. 5: eine erste Schnittansicht der zweiten Ausführungsform des Steckverbinders mit sichtbar gemachter innerer Wabenstruktur,
- Fig. 6: eine zweite Schnittansicht der zweiten Ausführungsform des Steckverbinders mit sichtbar gemachter innerer Wabenstruktur,
- Fig. 7: die zweite Schnittansicht der zweiten Ausführungsform des Steckverbinders mit anders angeordneten Ein- und Ausgangsanschlüssen,
- Fig. 8: eine dritte Ausführungsform eines Steckverbinders mit einem Gehäuse aus einer Sandwichstruktur, wobei auf der rechten Seite verschiedene mögliche Sandwichstrukturen aufgeführt sind.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

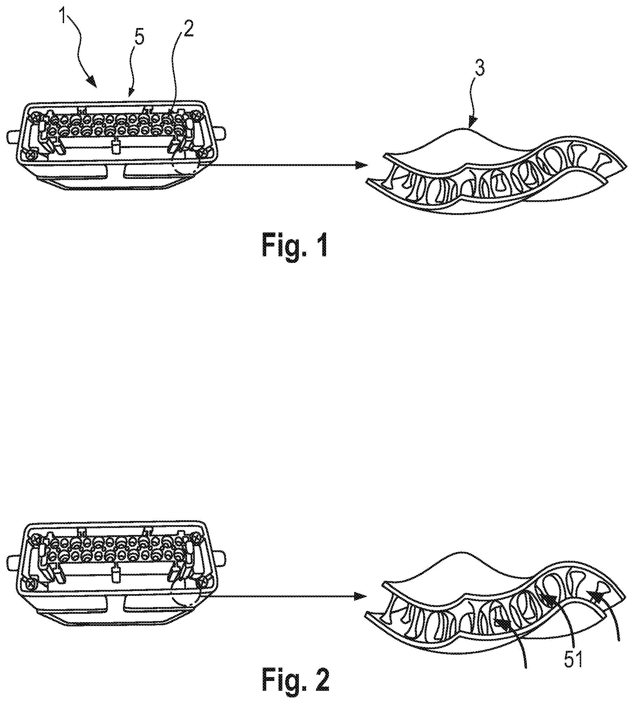

Fig. 2 zeigt auf der linken Seite denselben Steckverbinder 1, dessen Wand aus einer Sandwichstruktur 3 besteht. Auf der rechten Seite ist angedeutet, dass durch die Sandwichstruktur 3 ein Medium geleitet wird, um das Gehäuse 5 des Steckverbinders zu temperieren. In der dargestellten Ausführungsform ist das Medium Luft, welche durch die Wände des Steckverbinders geleitet wird. Zu diesem Zweck weist der Steckverbinder mindestens einen hier nicht gezeigten Eingangsanschluss zur Einleitung des Mediums ins Innere der Sandwichstruktur der Wände des Steckverbinders auf. Damit das Medium den Steckverbinder wieder verlassen kann, weist das Gehäuse 5 auch mindestens einen hier ebenfalls nicht gezeigten Ausgangsanschluss auf. Wenn das Medium Luft, zum Beispiel Druckluft ist, so kann der Ausgangsanschluss einfach ein oder mehrere Löcher in der Wand des Gehäuses sein, durch die die Luft wieder austreten kann.

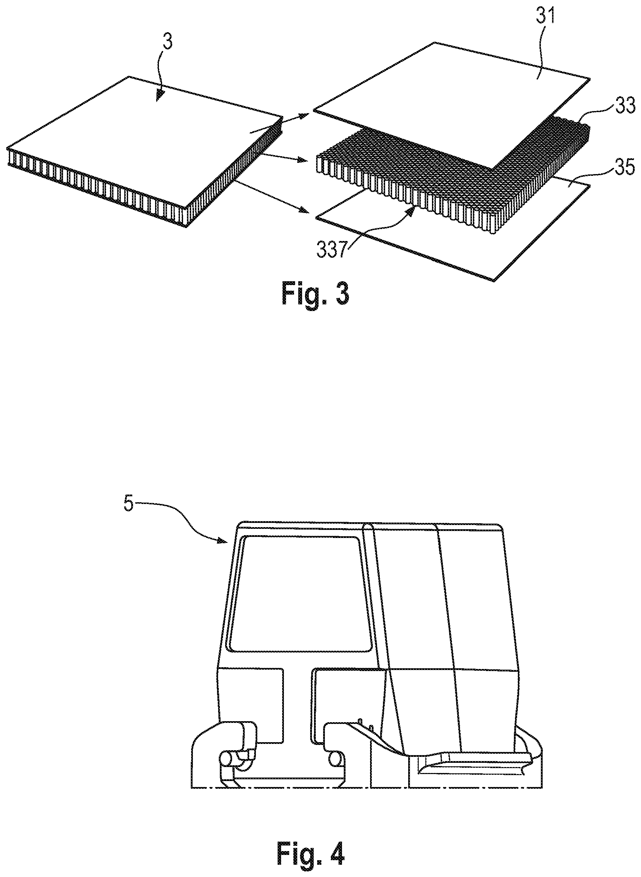

Fig. 3 zeigt einen beispielhaften Aufbau einer Sandwichstruktur 3. Die Sandwichstruktur 3 besteht aus einer oberen Decklage 31 und einer unteren Decklage 35. Dazwischen befindet sich ein Kern 33, der eine Struktur aufweist, welche den Fluss eines Mediums 51 durch sie hindurch zulässt. In Figur 3 hat der Kern 33 eine offenporige Wabenstruktur 337, bei der die Wabenwände Löcher 339 für den Durchfluss des Mediums 51 aufweisen. Die Struktur des Kerns 33 kann aber auch jede andere Form annehmen, die speziell auf den Anwendungsfall zugeschnitten ist. Die Struktur des Kerns 33 sollte lediglich den Fluss des Mediums 51 durch sie hindurch möglichst gut führen, so dass sie die Temperatur möglichst effizient abführt. Gleichzeitig trägt die Sandwichstruktur 3 zu einer guten mechanischen Robustheit des Gehäuses bei. Die Struktur 33 kann zum Beispiel ein offenporiger Metallschaum sein, oder ein offenporiger Schaum aus einem geeigneten Polymer oder einem natürlichen Material. Das Polymer oder das natürliche Material kann Füllstoffe zur besseren Temperaturableitung aufweisen. Die Struktur des Kerns kann auch mittels einer geeigneten mathematischen Methode, wie beispielsweise der Finite-Elementerechnung, auf den jeweiligen Anwendungsfall hin optimiert werden. Die Strukturdefinition kann auch mittels Algorithmen erzeugt werden, die die obigen Randbedingungen in den Algorithmus integriert hat.

Ein Steckverbindergehäuse aus solch einer Sandwichstruktur 3 weist eine der beiden Decklagen 31 oder 35 an der Innenseite des Gehäuses des Steckverbinders auf, und eine der Decklagen 35 oder 31 an der Außenseite des Gehäuses des Steckverbinders.

Eingangsanschlüsse und Ausgangsanschlüsse durchbrechen jeweils die Decklage 31 oder 35 an der Außenseite des Gehäuses 5 des Steckverbinders, so dass das Medium 51 durch den Eingangsanschluss in den Kern gelangt, durch den Kern geführt wird, und am Ausgangsanschluss den Kern wieder verlässt. Idealerweise sind die Ein- und Ausgangsanschlüsse an gegenüberliegenden Seiten des Gehäuses 5 des Steckverbinders 1 angeordnet, so dass das Medium 51 eine möglichst große Fläche der Gehäusewand des Steckverbinders 1 durchfließt, um einen möglichst gute Wärmeübergang zwischen dem Medium 51 und dem Gehäuse 5 zu erreichen.

Je nach Anwendung können die Ein- und Ausgangsanschlüsse aber auch an derselben Seite des Gehäuses angeordnet sein, um eine Verbindung zum Temperierungssystem zu erleichtern. Hierbei muss die Struktur des Kerns ausgestaltet sein, so dass das Medium 51 den Kern möglichst gleichmäßig durchfließt.

Die Decklagen 31, 35 und der Kern 33 des Gehäuses bestehen dabei vorzugsweise aus dem gleichen Material, so dass es zu keiner thermisch induzierten Ablösung der Decklagen 31, 35 vom Kern 33 kommen kann. Bei solch einer Konfiguration wird das Gehäuse idealerweise mittels eines geeigneten 3D Druckverfahrens hergestellt. Speziell bei komplexeren Gehäuseformen mit vielen Rundungen ist der 3D Druck das vorteilhafte Verfahren zur Herstellung des Gehäuses 5.

Je nach Anforderung kann der Kern 33 aber auch aus einem anderen Material wie die Decklagen 31, 35 bestehen. Hierbei werden dann Materialien mit möglichst ähnlichen thermischen Ausdehnungskoeffizienten gewählt, um Ablösungen der Decklagen 31, 35 vom Kern 33 zu verhindern.

Es sind viele Materialkombinationen denkbar, die jeweils auf den speziellen Anwendungsfall des Steckverbinders zugeschnitten werden können.

Das Medium 51 kann ein gasförmiges Medium wie Luft, Stickstoff oder Ähnliches sein. Das Medium 51 kann aber ebenfalls ein flüssiges Medium sein, welches dann im Kreislauf geführt wird und mittels einer Klimaanlage temperiert wird. Besonders gut eignet sich hierfür zum Beispiel das Kühlmittel zur Kühlung von Akkus der Firma 3M, welches Korrosion unterbindet, umweltfreundlich ist und ohne flüchtige organische Verbindungen auskommt.

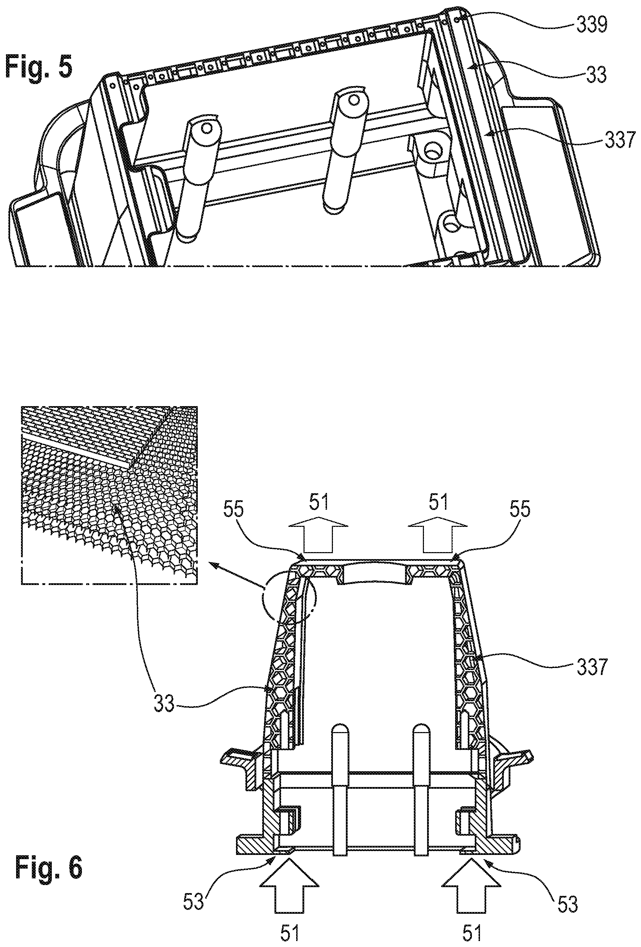

Fig. 4 zeigt eine zweite Ausführungsform eines Steckverbinders 1 mit einem Gehäuse 5. Auch hier bestehen die Wände des Gehäuses 5 aus einer Sandwichstruktur 3 mit einem Kern 33, der auch hier als Wabenstruktur 337 ausgeführt ist, wie die Schnittansicht der Fig. 5 zeigt. Die Wabenstruktur 337 des Kerns 33 ist derart orientiert, dass das Medium von einer Seite des Gehäuses 5 - in der Fig. 5 oben - zur anderen Seite des Gehäuses 5 - in der Fig. 5 unten - fließen kann. Damit sich das Medium im Kern 33 ausbreiten kann, weisen die Wände der Wabenstruktur 337 Löcher 339 auf, durch die das Medium 51 von einer Wabe zur nächsten gelangen kann.

Fig. 6 zeigt eine zweite Schnittansicht mit einer um 90° gedrehten Schnittebene. Hier sind zwei Eingangsanschlüsse 53 gezeigt, die das Medium 51 in den Kern 33 des Gehäuses 5 leiten. Durch die in Fig. 5 gezeigten Löcher 339 kann sich das Medium 51 nun über alle Waben verteilen und fließt nun längs der Waben zur anderen Seite des Steckverbinder, wo es dann an Ausgängen 55 wieder aus dem Kern 33 des Gehäuses 5 austreten kann. Eingänge 53 und Ausgänge 55 liegen sich idealerweise am Steckverbindergehäuse 5 diametral gegenüber. Diese Ausführungsform ist besonders für Steckverbindungen im Bahnbereich geeignet, bei denen als Medium zur Temperierung Druckluft verwendet wird, die an den Kupplungen der Bahnwaggons üblicherweise zur Verfügung steht.

Die Druckluft muss nicht im Kreislauf geführt werden, sondern kann an der Oberseite des Steckverbinders an den Ausgangsanschlüssen 55 einfach austreten. Die Ausgangsanschlüsse können in diesem Fall einfach Durchbrüche in der Deckschicht an der Außenseite des Steckverbinders sein.

Je nach Gehäuseform und Anforderungen können die Ein- und Ausgänge aber auch anders angeordnet sein. Das Steckverbindergehäuse 5 kann so durch das Medium 51 temperiert werden, je nachdem ob das Medium wärmer oder kälter als das Gehäuse 5 des Steckverbinders 1 ist, wird das Gehäuse 5 geheizt oder gekühlt.

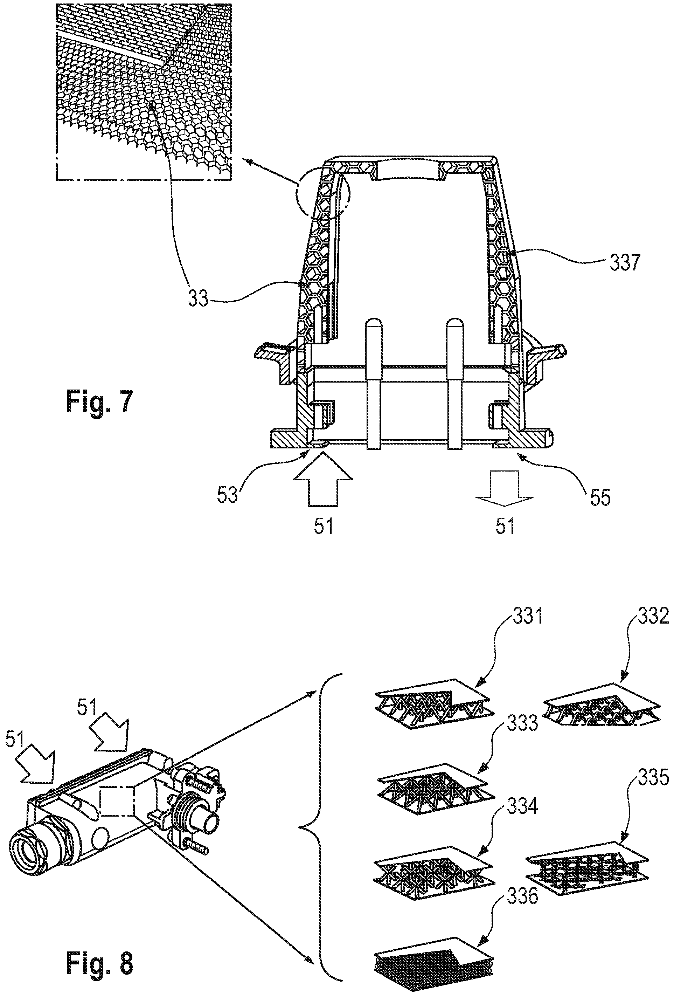

Fig. 7 zeigt die zweite Schnittansicht der Fig. 6 mit anders angeordneten Ein- und Ausgangsanschlüssen 53, 55. Hier ist der Eingangsanschluss 53 auf der linken Seite der Kontaktierungsebene des Steckverbinders angeordnet, und der Ausgangsanschluss 55 auf der rechten Seite der Kontaktierungsebene. Die Kontaktierungsebene ist die Ebene am Steckverbinder, an der er mit seinem Gegenstück verbunden wird, also die Ebene an der die beiden Steckverbinder zusammengesteckt werden. Diese Maßnahme ermöglicht ein einfaches Verbinden des Kreislaufs des Mediums 51 zugleich mit dem Verbinden der elektrischen Kontakte 2. Alle notwendigen Verbindungen werden daher mit dem Zusammenstecken des Steckverbindersystems hergestellt, was die Handhabung des Steckverbinders enorm vereinfacht. Hierbei muss die Struktur im Kern 33 so gestaltet sein, dass das Medium 51 möglichst durch das ganze Innere des Gehäuses 5 fließt, bevor es wieder austritt, um einen guten Wärmeübergang zu gewährleisten. Die Struktur des Kerns 33 sollte also zweigeteilt sein, um zu gewährleisten, dass das Medium 51 erst durch die erste Hälfte des Gehäuses 5 fließt, bevor es in die Zweite eintritt, und durch diese zurück zum Ausgangsanschluss 55 fließt.

Das Temperierungssystem für das Medium 51 kann dabei extern sein, es kann aber auch in das Stecksystem integriert sein. Als Temperierungssystem kommen dabei alle gängigen technischen Lösungen zur Klimatisierung in Frage, allen voran Systeme auf Wärmepumpenbasis.

Fig. 8 schließlich zeigt eine dritte Ausführungsform eines Steckverbinders 1. Dieser Steckverbinder 1 ist für hohe Ströme und Spannungen ausgelegt, und kann deswegen im Betrieb warm werden. Um die Wärme abführen zu können, ist auch hier das bekannte Gehäuse durch ein Gehäuse mit einer Sandwichstruktur 3 ersetzt. Auf der rechten Seite der Fig. 8 sind verschiedenartige spezielle Sandwichstrukturen 3 gezeigt deren Strukturen im Folgenden eigene Bezugszeichen aufweisen. Diese Sandwichstrukturen 3 können in verschiedenen Verfahren hergestellt werden. Die Struktur 331 wird im Feingußverfahren aus Metall hergestellt, und hat als Kern 33 eine tetraederförmige Struktur. Die Decklagen 31, 35 können aus verschiedenen Metallen wie Aluminium, Stahl, Nickel, Legierungen, metallgefüllten Kunststoffen oder auch aus Verbundwerkstoffen mit Faserverbünden hergestellt werden. Es sind ebenfalls natürliche Materialien und biologisch gewonnene Kunststoffe denkbar. Keramische Materialien können ebenfalls verwendet werden.

Die Struktur 332 weist ebenfalls einen tetraederförmigen Kern 33 auf, der hier aber nicht im Feingußverfahren, sondern aus gefalteten Metallblechen hergestellt ist.

Die Struktur 333 weist einen im Feingußverfahren hergestellten pyramidenförmigen Kern 33 auf.

Die Struktur 334 weist einen ebenfalls im Feingußverfahren hergestellten trihexagonalen Kern 33 auf. Der trihexagonale Kern 33 kann auch aus Metalldraht gewoben bzw. gewirkt werden, woraus sich die Struktur 335 ergibt.

Die Struktur 336 ist aus Textilfasern gewebt bzw. gewirkt. Textilfasern sind bekannt dafür, den Fluss eines gasförmigen Mediums durch sie hindurch zuzulassen, so dass solch eine Struktur besonders bei einem gasförmigen Medium 51 geeignet ist. Die Herstellungsverfahren hierfür sind besonders ausgereift, so dass die Herstellung eines Kerns 33 mit solch einer Struktur 336 sehr kostengünstig ist.

In einer besonders bevorzugten Ausführungsform wird das Gehäuse 5 mit der Sandwichstruktur 3 im 3D Druckverfahren hergestellt, was komplexe Geometrien ermöglicht, die mit anderen Verfahren nicht hergestellt werden können. Gerade wenn die Struktur des Kerns 33 mit computergestützten Verfahren berechnet und erstellt wird, kann diese Struktur mit einem 3D Drucker besonders einfach hergestellt werden. Zusätzlich sind hier der Kern 33 und die Deckschichten 31, 35 aus demselben Material und monolithisch hergestellt, so dass es zu keinen Ablösungen der Deckschichten 31, 35 vom Kern 33 kommen kann.

Alle etablierten additiven Fertigungsverfahren wie SLS (Selektives Laser Sintern), FFF (Fused Filament Fabrication), SL (Stereolithografie), SLM (Selektives Laserstrahlschmelzen), EBM (Elektronenstrahlschmelzen) und viele andere additive Verfahren können zur Herstellung des Gehäuses 5 verwendet werden.

Alternativ kann das Gehäuse aber auch mit klassischen Herstellungsverfahren wie Spritzguß, Druckguß, Vakuum-Harz-Transfer, und klassische Lagentechniken wie GFK (Glasfaserverstärkter Kunststoff) hergestellt werden. Hierbei kann das Gehäuse 5 in 2 Hälften vorproduziert werden, die dann zusammengefügt werden.

### Bezugszeichenliste

- 1: Steckverbinder
- 2: Kontakt
- 3: Sandwichstruktur
- 5: Gehäuse

- 31: Obere Decklage
- 33: Kern
- 35: Untere Decklage

- 51: Medium
- 53: Eingangsanschluss
- 55: Ausgangsanschluss

- 331: Tetraederförmige Gitterstruktur aus Feinguss
- 332: Tetraederförmige Gitterstruktur aus gefaltetem Metallblech
- 333: Pyramidenförmige Gitterstruktur
- 334: Trihexagonale Gitterstruktur aus Feinguss
- 335: Trihexagonale Gitterstruktur aus gewobenem oder gewirktem Draht
- 336: Gewobene oder gewirkte Struktur aus Draht, Kunstfasern, natürlichen Fasern oder einer Mischung davon
- 337: Wabenstruktur mit Löchern zum Durchfluss des Mediums
- 339: Löcher in der Wabenstruktur

## Patentansprüche

1. Steckverbinder (1) zum Übertragen hoher elektrischer Leistungen, aufweisend:
- mindestens einen Kontakt (2) zum Übertragen der elektrischen Leistung
- ein Wände aufweisendes Gehäuse (5) zum Halten und Isolieren des mindestens einen Kontakts und/oder eines Kontaktträgers, welcher zur Lagerung des mindestens einen Kontakts vorgesehen ist,
**dadurch gekennzeichnet, dass**
die Wände des Gehäuses (5) zumindest teilweise aus einer Sandwichstruktur (3) bestehen, welche die Durchleitung eines Mediums (51) zur Temperierung ermöglichen, wobei Sandwichstruktur (3) eine obere Deckschicht (31) und eine untere Deckschicht (35) aufweist, zwischen denen ein Kern (33) angeordnet ist, wobei eine der Deckschichten (31, 35) an der Außenseite des Gehäuses (5) angeordnet ist und die andere Deckschicht (35, 31) an der Innenseite des Gehäuses (5) angeordnet ist, und das Gehäuse (5) dazu mindestens einen Eingangsanschluss (53) zum Einleiten des Mediums (51) und mindestens einen Ausgangsanschluss (55) zum Ausleiten des Mediums (51) aufweist.

2. Steckverbinder gemäß Anspruch 1, **dadurch gekennzeichnet, dass** der Kern (33) ein offenporiger Schaum aus Metall, einem Polymer oder einem natürlichen Material ist.

3. Steckverbinder gemäß einem der Ansprüche 1 oder 2, **dadurch gekennzeichnet, dass** der Kern (33) eine gitterförmige Struktur aufweist, die pyramidenförmig (333), tetraederförmig (331, 332) oder trihexagonal (334, 335) ausgestaltet ist.

4. Steckverbinder gemäß einem der vorhergehenden Ansprüche, **dadurch gekennzeichnet, dass** der Kern (33) eine gewebte oder gewirkte Struktur (336) aufweist, wobei die Webfäden aus Metall, einer Kunstfaser, einer natürlichen Faser oder einer Mischung bestehen.

5. Steckverbinder gemäß einem der vorhergehenden Ansprüche, **dadurch gekennzeichnet, dass** der Kern (33) eine Wabenstruktur (337) aufweist, wobei die Waben an bestimmten Stellen (Durchgangs-)Öffnungen aufweisen, um das Medium (51) zu leiten.

6. Steckverbinder gemäß einem der vorhergehenden Ansprüche, **dadurch gekennzeichnet, dass** Eingangsanschluss (53) und Ausgangsanschluss (55) zum Temperieren großer Teile des Gehäuses (5) an gegenüberliegenden Seiten des Gehäuses (5) angeordnet sind.

7. Steckverbinder gemäß einem der vorhergehenden Ansprüche , **dadurch gekennzeichnet, dass** der Ausgangsanschluss (55) aus einem oder mehreren Durchbrüchen durch die Deckschicht (31, 35) an der Außenseite des Gehäuses besteht, durch die ein gasförmige Medium (51) austreten kann.

8. Steckverbinder gemäß einem der vorhergehenden Ansprüche, **dadurch gekennzeichnet, dass** Eingangsanschluss (53) und Ausgangsanschluss (55) an derselben Ebene des Gehäuses wie der mindestens eine elektrische Kontakt (2) zum gleichzeitigen Herstellen der Verbindung des elektrischen Kontakts (2) und des Mediums (51) angeordnet sind.

9. Steckverbinder gemäß einem der vorhergehenden Ansprüche, **dadurch gekennzeichnet, dass** das Gehäuse (5) mittels eines additiven Fertigungsverfahren herstellbar ist.

10. Steckverbinder gemäß einem der vorhergehenden Ansprüche, **dadurch gekennzeichnet, dass** ein Temperierungssystem zur Temperierung des Mediums (51) in den Steckverbinder (1) integriert ist.

11. Steckverbinder gemäß einem der vorhergehenden Ansprüche 1 bis 9, **dadurch gekennzeichnet, dass** ein Temperierungssystem zur Temperierung des Mediums (51) außerhalb des Steckverbinders (1) angeordnet ist.

## Claims

1. Connector (1) for transmitting high electrical power, comprising:
- at least one contact (2) for transmitting the electrical power
- a housing (5), having walls, for holding and insulating the at least one contact and/or a contact carrier which is provided for storing the at least one contact,
**characterized in that**
the walls of the housing (5) consist at least partially of a sandwich structure (3), which allow the passage of a temperature-control medium (51), the sandwich structure (3) having an upper cover layer (31) and a lower cover layer (35) between which a core (33) is arranged, one of the cover layers (31, 35) being arranged on the outside of the housing (5) and the other cover layer (35, 31) being arranged on the inside of the housing (5), and the housing (5) having at least one input terminal (53) for introducing the medium (51) and at least one output terminal (55) for discharging the medium (51).

2. Connector according to claim 1, **characterized in that** the core (33) is an open-pore foam made of metal, a polymer or a natural material.

3. Connector according to either of claims 1 or 2, **characterized in that** the core (33) has a lattice-like structure which is pyramidal (333), tetrahedral (331, 332) or trihexagonal (334, 335).

4. Connector according to any of the preceding claims,
**characterized in that** the core (33) has a woven or knitted structure (336), the weaving threads consisting of metal, a synthetic fiber, a natural fiber or a mixture.

5. Connector according to any of the preceding claims, **characterized in that** the core (33) has a honeycomb structure (337), the honeycombs having (through-)openings at certain points to guide the medium (51).

6. Connector according to any of the preceding claims,
**characterized in that** the input terminal (53) and the output terminal (55) are arranged on opposite sides of the housing (5) for controlling the temperature of large parts of the housing (5).

7. Connector according to any of the preceding claims,
**characterized in that** the output terminal (55) consists of one or more gaps in the cover layer (31, 35) on the outside of the housing, through which gaps a gaseous medium (51) can escape.

8. Connector according to any of the preceding claims,
**characterized in that** the input terminal (53) and the output terminal (55) are arranged on the same plane of the housing as the at least one electrical contact (2) for simultaneously establishing the connection between the electrical contact (2) and the medium (51).

9. Connector according to any of the preceding claims,
**characterized in that** the housing (5) can be produced by means of an additive manufacturing process.

10. Connector according to any of the preceding claims,
**characterized in that** a temperature-control system for controlling the temperature of the medium (51) is integrated into the connector (1).

11. Connector according to any of the preceding claims 1 to 9, **characterized in that** a temperature-control system for controlling the temperature of the medium (51) is arranged outside the connector (1).

## Revendications

1. Connecteur à fiches (1) pour la transmission de puissances électriques élevées, présentant :
- au moins un contact (2) pour la transmission de la puissance électrique,
- un boîtier (5) présentant des parois pour le maintien et l'isolation de l'au moins un contact et/ou d'un support de contact qui est prévu pour le montage de l'au moins un contact,
**caractérisé en ce que**
les parois du boîtier (5) sont constituées au moins partiellement d'une structure en sandwich (3) qui permet le passage d'un milieu (51) pour l'équilibrage de température, dans lequel la structure en sandwich (3) présente une couche de recouvrement supérieure (31) et une couche de recouvrement inférieure (35) entre lesquelles est disposé un noyau (33), dans lequel l'une des couches de recouvrement (31, 35) est disposée côté extérieur du boîtier (5) et l'autre couche de recouvrement (35, 31) est disposée côté intérieur du boîtier (5), et le boîtier (5) présente à cet effet au moins un raccord d'entrée (53) pour l'introduction du milieu (51) et au moins un raccord de sortie (55) pour l'évacuation du milieu (51).

2. Connecteur à fiches selon la revendication 1, **caractérisé en ce que** le noyau (33) est une mousse à pores ouverts en métal, en polymère ou en un matériau naturel.

3. Connecteur à fiches selon l'une des revendications 1 ou 2,
**caractérisé en ce que** le noyau (33) présente une structure en forme de grille de forme pyramidale (333), tétraédrique (331, 332) ou trihexagonale (334, 335).

4. Connecteur à fiches selon l'une des revendications précédentes,
**caractérisé en ce que** le noyau (33) présente une structure tissée ou tricotée (336), dans lequel les fils de tissage sont constitués de métal, d'une fibre synthétique, d'une fibre naturelle ou d'un mélange.

5. Connecteur à fiches selon l'une des revendications précédentes, **caractérisé en ce que** le noyau (33) présente une structure en nid d'abeilles (337), dans lequel les nids d'abeilles présentent des ouvertures (de passage) à des endroits déterminés afin de guider le milieu (51).

6. Connecteur à fiches selon l'une des revendications précédentes, **caractérisé en ce que** le raccord d'entrée (53) et le raccord de sortie (55) sont disposés sur des côtés opposés du boîtier (5) pour l'équilibrage de température de grandes parties du boîtier (5).

7. Connecteur à fiches selon l'une des revendications précédentes, **caractérisé en ce que** le raccord de sortie (55) est constitué d'un ou plusieurs ajours à travers la couche de recouvrement (31, 35) côté extérieur du boîtier à travers lesquels un milieu (51) gazeux peut s'échapper.

8. Connecteur à fiches selon l'une des revendications précédentes, **caractérisé en ce que** le raccord d'entrée (53) et le raccord de sortie (55) sont disposés au même niveau du boîtier que l'au moins un contact (2) électrique pour l'établissement simultané de la liaison du contact (2) électrique et du milieu (51).

9. Connecteur à fiches selon l'une des revendications précédentes, **caractérisé en ce que** le boîtier (5) peut être établi au moyen d'un procédé de fabrication additive.

10. Connecteur à fiches selon l'une des revendications précédentes, **caractérisé en ce qu'**un système d'équilibrage de température pour l'équilibrage de température du milieu (51) est intégré dans le connecteur à fiches (1).

11. Connecteur à fiches selon l'une des revendications précédentes 1 à 9, **caractérisé en ce qu'**un système d'équilibrage de température pour l'équilibrage de la température du milieu (51) est disposé à l'extérieur du connecteur à fiches (1).
